**Europäisches Patentamt**

**European Patent Office**

**Office européen des brevets**

(19)

(11) Publication number: **0 167 311**
**A2**

## (12) EUROPEAN PATENT APPLICATION

(21) Application number: **85304156.4**

(22) Date of filing: **12.06.85**

(51) Int. Cl.⁴: **C 09 K 19/60**

(30) Priority: **28.06.84 GB 8416416**

(43) Date of publication of application:
**08.01.86 Bulletin 86/2**

(84) Designated Contracting States:
**AT BE CH DE FR IT LI NL SE**

(71) Applicant: **ITT INDUSTRIES INC.**
**320 Park Avenue**
**New York, NY 10022(US)**

(84) Designated Contracting States:
**BE CH FR IT LI NL SE AT**

(71) Applicant: **Deutsche ITT Industries GmbH**
**Hans-Bunte-Strasse 19 Postfach 840**
**D-7800 Freiburg(DE)**

(84) Designated Contracting States:
**DE**

(72) Inventor: **Coates, David**
**12 Blackbushe**
**Bishops Stortford Hertfordshire(GB)**

(74) Representative: **Ruffhead, Philip Geoffrey**
**ITT-UK Patent Department Maidstone Road Foots Cray**
**Sidcup DA14 5HT(GB)**

(54) Smectic liquid crystal cells.

(57) A guest-host smectic cell incorporates an alkyl 1,4-diaminoanthraquinone-2-carboxylate blue dye which is relatively highly resistant to degradation when exposed to the fields and current densities typically employed for switching by means of electrohydrodynamic induced instability effects. Such dyes may be employed admixed with other stable dyes to provide a black dye.

EP 0 167 311 A2

Croydon Printing Company Ltd.

## SMECTIC LIQUID CRYSTAL CELLS

This invention relates to smectic liquid crystal cells, and in particular to such cells where the liquid crystal filling of the cell also incorporates a guest dye together with a dopant providing anisotropic conductivity such that electrohydrodynamic instability can be induced by the application of an electric potential between opposed internal electrodes of the cell.

The guest-host effect in field-effect mode nematic cells by which pleochroic dye molecules are aligned by the molecular alignment of the nematic 'host' molecules is well known. This effect also exists when the host is a smectic. In a nematic guest-host cell one of the difficulties has been in the finding of a blue dye that is both chemically compatible with the host material and adequately soluble in it to provide a deep enough colour in such relatively small thickness. Blue dyes which are satisfactory for this purpose are described in our patent specification No. 2,065,158A. Pleochroic dyes have also been incorporated in laser-addressed smectic cells where such dyes have been used to absorb the incident laser light and thus produce localised heating of the liquid crystal layer temporarily into the isotropic phase. In this instance, and also in the case of dyes for nematics, it is desirable that the dye shall not be degraded by photochemical effects in the presence of the host material. Blue dyes which exhibit this resistance to photochemical degradation are described in patent specification No. 2,091,753A.

In known types of laser-addressed smectic displays the laser-written tracks are written in a field of contrasting appearance that has been produced by thermal cycling, either by joile heating in resistive transparent films bordering the liquid crystal layer, or by the absorption of light energy from a flash source using the method described in patent specification No. 2093206A. Any current flow in the liquid crystal has therefore been limited to the sort of very low values characteristic of field effect devices, rather than the much larger values associated with dynamic scattering mode type devices.

Now it is desired to extend the application of guest-host smectic cells to applications that involve exciting dynamic scattering, and it is found that blue dyes that have proved satisfactory for other guest-host applications on account of their solubility and resistance to photochemical degradation are not suitable for this new application because they deteriorate too rapidly in the presence of the relatively high current densities and field strengths typically required to induce dynamic scattering in a smectic.

According to the present invention a liquid crystal cell consisting of or including an envelope containing a layer of a liquid crystal filling that is a guest dyed smectic in which electrohydrodynamic instability can be induced is characterised in that the guest dye consists of or includes an alkyl 1,4-diaminoanthraquinone-2-carboxylate.

In the ensuing description the properties of cells incorporating dyes within the class stipulated are compared with those containing related dyes. Also included is a brief description of the manufacture of dyes within the class stipulated.

Compound A of the accompanying table (1-methylamino-4-(4'-butoxyphenyl)aminoanthraquinone) is a turquoise blue dye having absorption peaks at 620 and 650nm and an order parameter S = 0.59. (This is one of the dyes specifically exemplified in Patent Specification No. 2091753A.) This dye is extremely resistant to photochemical degradation as is evidenced by a severe test in which a liquid crystal test cell containing the dye was placed approximately 15cm from a 500 watt Hanovia mercury arc lamp for a period of some hours while being fan-cooled to about 60°C. The liquid crystal filling of the test cell comprised a nematic host marketed by Merck under the designation ZLI 1982, 3 weight % of a cholesteric additive marketed by BDH under the designation CB156, and approximately 1.3 weight % of the dye. When using Compound A as the dye, bleaching of the test cell was not noticeable to the eye (i.e. 20% loss in absorption) until after about 550 hours exposure to the light, whereas in a comparison test using a blue azo dye bleaching was noticeable after only 3 to 4 hours.

Compounds B and C of the accompanying table (1,5-dihydroxy-4,8-diamino-3-(4'octyloxyphenyl)anthraquinone and 1,5-dihydroxy-4,8-diamino-2-(4'-pentyloxyphenyl) anthraquinone respectively) are two blue dyes that have higher order parameters (S = 0.67 and S = 0.75) than that of compound A, which makes them better suited to guest-host applications where the function of the dye is to show colour in one state of the cell and to show no colour in the other state. Their resistance to photochemical degradation is not quite so good as that of compound A, but is still markedly better than that typical of azo dyes, bleaching not becoming apparent in the test cell until after 130 and 100 hours respectively. Compounds B and C are respectively the subject matter of Patent Specifications Nos. 2069518A and 2051113A (Mitsui Toatsu Chemicals).

The three compounds A, B and C do not however, perform very well in a test designed to investigate their suitability for inclusion in dynamic scattering type smectic cells. For this testing, internally electroded test cells were used which provided a liquid crystal layer thickness of 12 microns. The filling consisted of the smectic marketed by BDH under the designation S4, 1.5 weight % dye, and 0.05 weight % hexadecyltrimethylammonium salt (to provide the requisite conductivity for electrohydrodynamic instability). Each test cell was then put through a switching cycle repeated at one second intervals. The cycle involved switching the cell into a scattering state by the application of a 300 volt unidirectional pulse of 20msec duration, followed by the switching of the cell into the clear state by the application of a 150 volts rms burst of signal at 1.5 KHz lasting 4msec. Initially, the current density during the scattering pulse can be as high as 2mA per sq.cm., typically falling to about 250 $\mu$A per sq.cm. after about 100,000 cycles. The relatively low duty cycle of the switching pulses was chosen to allow adequate cooling between consecutive scattering pulses. The polarity of each scattering pulse was arranged to be the opposite of that of its immediate predecessor so as to eliminate any long term charge bias.

With each of the three dyes, compounds A, B and C, there was noticeable degradation within 100,000 switching cycles, and this became more marked as switching continued. The first evidence of degradation occurred at the high field regions as the edges of the overlap between the electrodes on opposite sides of the liquid crystal layer. In these areas the dye would begin not to switch with the liquid crystal host, but remain showing colour when the host was set into homeotropic alignment by the 1.5KHz signal. As time progressed the non-switching area of permanent colour extended inwardly to cover progressively more of the area of electrode overlap (pixel area).

Compound D (octadecyl 1,4-diaminoanthraquinone-2-carboxylate) was prepared by conventional organic synthesis. This involved standard nitration at 0-5$^{o}$C of 2-methylanthraquinone followed by chromic acid oxidation (Chemical Abstracts 51,13833) to give 1-nitroanthraquinone-2-carboxylic acid. Reduction using sodium borohydride (Synthesis 1976 p.528) gave a good yield of 1-aminoanthraquinone-2-carboxylic acid, which was then nitrated (German Patent No. 2348557) to give 1-amino-4-nitroanthraquinone-2-carboxylic acid. This compound was then reduced using sodium borohydride to give 1,4-diaminoanthraquinone-2-carboxylic acid. The required ester was made using octadecyltoluenesulphonate as described in Chemical Abstracts 64,2204, and was purified by column chromatography and crystallisation from ethanol/toluene.

This material showed signs of bleaching in the photochemical degradation test with the mercury arc lamp after about 40 hours. This figure, while not nearly as good as that of compound A, and also inferior to those of compounds B and C, is still very much better than the comparable figures for azo dyes. On the other hand this material fared much better in the electrochemical test, and showed no signs of degradation after 500,000 cycles of switching.

Compounds E and F (respectively decyl, and butyl 1,4-diaminoanthraquinone-2-carboxylates) were prepared by the same route used for preparing compound D, but with different alkyltoluene-sulphonates appropriate for the required esters. Both these esters also showed no signs of degradation after 500,000 cycles of switching. It has been found that the length of the alkyl chain has only a slight effect upon the quality of the scattering and hence upon the intensity of colour displayed. Generally larger chain lengths produce a slightly better scattering, but to be weighed against this is the fact that they have a lower molar absorbtivity, and therefore more dye needs to be added to achieve the same colour intensity as that of a shorter chain dye. The octadecyl homologue has an order parameter S, in ZLI 1982, of 0.73 and a peak of absorption at 640nm; whereas the equivalent figures for the decyl homologue are S = 0.71 and a peak of absorption at 639nm. Therefore, the length of the alkyl chain is a compromise with a range from 4 to 18 carbon atoms being a most preferred range within a wider range of from 1 to 20 carbon atoms.

One of the major applications for this type of smectic display cell is in the production of a display having an appearance similar to that of the conventional printed page. This requires the use of a black pleochroic dye. Such a dye can be formulated by mixing a blue dye of the present invention with appropriate proportions of stable dyes of other colours, for instance, a yellow and a red. Examples of suitable yellow dyes are compounds G and H (respectively 1,5-bis(4'-substituted phenylthio)anthraquinone and 1-amino-6-4'alkyl-phonoxy)anthraquinone) while examples of suitable red dyes are comounds J and K (respectively 1,4,5,8-tetra(4'-substituted phenylthio)anthraquinone and 1-amino-2-(4'-alkylphenoxy)-4-hydroxyanthraquinone). In both cases the substituent is hydrogen or an alkyl group.

The black dye content of a typical guest-host mixture using 34 as the host material consisted of 0.95 weight %, Component E, 1.0 weight %, Component G where R is a hydrogen radical, and 0.5 weight % Component K where R' is a methyl radical. That of an alternative mixture, also using S4 as the host material, consisted of 1.2 weight % Component D, 1.0 weight % Component G and 0.5 weight % Component K, components G and K having the same radicals as in the previous example.

CLAIMS:

1. A liquid crystal cell consisting of or including an envelope containing a layer of a liquid crystal filling that is a guest dyed smectic in which electrohydrodynamic instability can be induced characterised in that the guest dye consists of or includes an alkyl 1,4-diaminoanthraquinone-2-carboxylate.

2. A liquid crystal cell as claimed in claim 1, characterised in that the filling exhibits positive dielectric anisotropy and includes an anisotropic conductivity dopant suitable for inducing electrohydrodynamic instability which dopant also promotes homeotropic alignment.

3. A liquid crystal cell as claimed in claim 1 or 2, characterised in that the guest dye is a mixture whose colour is black.

4. A liquid crystal cell as claimed in claim 3, characterised in that the guest dye includes 1,5-phenylthioanthraquinone, or a 1,5-(4'-alkylphenylthio)anthraquinone, or a 1-amino-6-(4'-alkylphenoxy)anthraquinone, and also includes a 1,5-bis(4'-substituted phenylthio)anthraquinone or a 1-amino-6-(4'-alkylphenoxy)anthraquinone, and also includes a 1,4,5,8 - tetra (4'-substituted phenylthio)anthraquinone or a 1-amino-2-(4'-alkylphenoxy)-4-hydroxyanthraquinone, wherein the substituent is hydrogen or an alkyl group.

5. A liquid crystal cell as claimed in any preceding claim, characterised in that the alkyl group of the alkyl 1,4-diaminoanthraquinone-2-carboxylate contains between one and twenty carbon atoms.

6. A liquid crystal cell as claimed in any claim of claims 1 to 4, characterised in that the alkyl group of the alkyl 1,4-diaminoanthraquinone-2-carboxylate contains between four and eighteen carbon atoms.

0167311

## TABLE

Compound A.

Compound B.

Compound C.

Compound D

Compound E.

Compound F.

TABLE - cont'd

Compound G.

Compound H.

Compound J.

Compound K.

R = H or Alkyl

R$^{\prime}$ = Alkyl